# EUROPÄISCHE PATENTSCHRIFT

(11) **EP 2 005 100 B1**
(45) Veröffentlichungstag und Bekanntmachung des Hinweises auf die Patenterteilung: **31.10.2012**
(21) Anmeldenummer: 07727759.8
(22) Anmeldetag: 04.04.2007
(51) Int. Cl.: F28D 15/02, B01J 8/28

(54) **WÄRMEROHR, HEATPIPE-REFORMER MIT EINEM SOLCHEN WÄRMEROHR UND VERFAHREN ZUM BETREIBEN EINES SOLCHEN HEATPIPE-REFORMERS**
HEAT PIPE, HEAT PIPE REFORMER COMPRISING SUCH A HEAT PIPE, AND METHOD FOR THE OPERATION OF SUCH A HEAT PIPE REFORMER
TUBE ÉCHANGEUR DE CHALEUR, REFORMEUR À CALODUC COMPRENANT UN TEL TUBE ÉCHANGEUR DE CHALEUR ET PROCÉDÉ POUR UTILISER UN TEL REFORMEUR À CALODUC

(30) Priorität: 05.04.2006 DE 102006016005
(43) Veröffentlichungstag der Anmeldung: 24.12.2008
(73) Patentinhaber: Bioage GmbH, 85356 Freising (DE)
(72) Erfinder: STEER, Thomas, 85356 Freising (DE)
(74) Vertreter: Alber, Norbert
(86) Internationale Anmeldenummer: PCT/EP2007/053288
(87) Internationale Veröffentlichungsnummer: WO 2007/113311

(56) Entgegenhaltungen:
- EP-A- 0 469 260
- WO-A-00/77128
- GB-A- 1 364 542
- JP-A- 56 142 391

## Beschreibung

Die Erfindung betrifft ein Wärmerohr nach dem Oberbegriff des Anspruch 1, einen Heatpipe-Reformer mit einem solchen Wärmerohr nach Anspruch 11 und ein Verfahren zum Betreiben eines solchen Heatpipe-Reformers nach Anspruch 12.

### Stand der Technik

Wärmerohre, auch Heatpipes genannt, sind als äußerst effektive Wärmetransportsysteme seit langem bekannt. Sie beruhen auf dem Prinzip der Wärmeübertragung durch Verdampfung und Kondensation in einem geschlossenen System. Im Gegensatz zu großen Kreislaufsystemen im Naturumlauf finden diese jedoch in einem einzigen, gasdicht verschlossenen Rohr statt. Das Rohr ist evakuiert und enthält ausschließlich eine Flüssigkeit, die im gewünschten Temperaturbereich verdampft. Die Flüssigkeit nimmt bei der Verdampfung aus einem heißen Reservoir Wärme auf, die sie dann in Zuge der Kondensation an ein kaltes Reservoir abgibt. Von Bedeutung ist, dass Verdampfung und Kondensation in der Heatpipe bei gleichem Druck und damit bei gleicher Temperatur ablaufen. Die Wärmeübertragungsraten sind sehr hoch, so dass die Wärmeübertragung mit Hilfe einer Heatpipe quasi verlustfrei abläuft, d.h. ohne zusätzliches treibendes Temperaturgefälle.

Im Zusammenhang mit Heatpipes sind eine Vielzahl von Flüssigkeiten als Wärmeträgermedium untersucht worden, die sich für unterschiedliche Temperaturbereiche eignen. Im Bereich der Umgebungstemperaturen, wie z.B. der Kühlung von Hochleistungsprozessoren in der Mikroelektronik, verwendet man unter anderem organische Wärmeträger (Pentan, Methanol, Aceton, etc.), im Hochtemperaturbereich eignen sich vor allen Dingen Alkalimetalle.

Aus der WO 00/77128 A1 ist ein druckaufgeladener Reformer zur Erzeugung von Brenngas aus kohlenstoffhaltigen Einsatzstoffen durch allotherme Wasserdampfvergasung in einer Wirbelschicht bekannt. Zum Einbringen von Wärme in die reformierende Wirbelschicht werden Heatpipes eingesetzt.

In allothermen Vergasungsreaktoren eignen sich vor allen Dingen Natrium und Kalium als Wärmeträgermedien in Heatpipes. Natrium kommt hierbei eine besondere Bedeutung zu, da es von allen möglichen Flüssigkeiten die höchste Kondensationswärme besitzt (3.913 kJ/kg bei 900 °C) und sich somit ein entsprechend niedriger zirkulierender Massenstrom einstellt. Bei Kalium stellt sich aufgrund des höheren Dampfdruckes eine etwas höhere Energiedichte im Dampf ein (Kalium rd. 2.500 kJ/m³, Natrium rd. 1.200 kJ/m³ bei 900 °C). Die Gesamteignung einer Flüssigkeit zum Wärmeträgermedium wird durch die Merit-Zahl angegeben. Sie liegt für Natrium bei mehr als dem Doppelten im Vergleich zu Kalium, so dass in Natrium der Gesamtbetrachtung günstiger ist als Kalium.

Bei dem Betrieb des aus der WO 00/77128 A1 bekannten Reformers wurde festgestellt, dass im druckaufgeladenen Betrieb des Vergasers - im Gegensatz zum drucklosen Betrieb - die Heatpipes innerhalb weniger Stunden stark an Wärmeübertragungsleistung verlieren.

Weiterhin ist aus der EP-A-0 469 260 bereits der Wasserstoffabzug aus einem Wärmerohr bekannt, jedoch außerhalb des Wärme abgebenden Bereiches, wobei ein Wasserstoffpartialdruckgradient zwischen der Innenseite der Rohrhülle und deren Außenseite bereitgestellt wird.

Es ist daher Aufgabe der vorliegenden Erfindung ein Wärmerohr bzw. Heatpipe anzugeben, dessen Wärmeübertragungsleistung insbesondere bei Einsatz in druckaufgeladener Vergasungsatmosphäre über einen längeren Zeitraum nur unwesentlich abnimmt. Weiter ist es Aufgabe der vorliegenden Erfindung einen Heatpipe-Reformer mit einem solchen Wärmerohr sowie ein Verfahren zum Betreiben eines solchen Heatpipe-Reformers anzugeben.

Die Lösung dieser Aufgaben erfolgt durch die Merkmale der Ansprüche 1, 11 bzw. 12.

### Beschreibung der Erfindung

Als Ursache für die Deaktivierung der Heatpipes wurde die Tatsache ermittelt, dass das Wandmaterial der Heatpipe im Arbeitsbereich bei 800 - 900 °C für molekularen Wasserstoff durchlässig ist und der Wasserstoff in das Innere der Heatpipe diffundiert. Der Wasserstoff wird durch die Dampfströmung des Wärmeträgermediums in der Heatpipe vor allen Dingen in den Kondensationsbereich der Heatpipe transportiert, an dessen totem Ende er sich als Inertgas anreichert. In Konsequenz verringert sich dort der Partialdruck des Wärmeträgermediums, wodurch sich die Kondensationstemperatur verringert. Die Kondensationstemperatur sinkt unter die Betriebstemperatur des Reaktors, die Kondensation kommt im entsprechenden Bereich zum Erliegen. Der Wasserstoffdruck in der Heatpipe entspricht an toten Ende des Kondensationsteils nahezu dem Totaldruck des Verdampfungs- und Kondensationsprozesses der Heatpipe, der wiederum dem Dampfdruck des Wärmeträgermediums bei der entsprechenden Temperatur entspricht.

Im atmosphärischen Betrieb ist diese Anreicherung zunächst ohne wesentlichen Einfluss, da der Verdampfungsdruck von Natrium oder Kalium hoch genug ist, so dass der Wasserstoff durch Diffusion die Heatpipe wieder verlässt.

Der Dampfdruck von Natrium beträgt bei 850 °C rd. 0,8 bar, der von Kalium etwa 2,3 bar. Unterstellt man einen 30%-igen Wasserstoffanteil auf der Produktgasseite, so entspricht das einem Partialdruck von 0,3 bar im Produktgas. Damit ist bei einem atmosphärischen Reformer die treibende Druckdifferenz zum Austreiben des Wasserstoffes aus der Heatpipe immer ausreichend hoch.

Im druckaufgeladenen Betrieb ergibt sich das Problem, dass der Totaldruck innerhalb der Heatpipe in der Nähe oder unterhalb des Partialdruckes des Wasserstoffes im Vergaser (Reformer) liegt, so dass kein treibendes Druckgefälle vorhanden ist, das dazu führen könnte, dass der Wasserstoff die Heatpipe wieder verlässt. 30% Wasserstoff in einem druckaufgeladenen Vergaser mit einem Druck von 5 bar sind gleichbedeutend mit einem Partialdruck des Wasserstoffs von 1,5 bar. Es wäre somit beim Einsatz von Kalium (Verdampfungsdruck 2,3 bar) noch ein treibendes Druckgefälle von ca. 0,8 bar vorhanden, um Wasserstoff gegen das Produktgas aus der Heatpipe auszutreiben, nicht jedoch beim Einsatz von Natrium (Verdampfungsdruck 0,8 bar).

Durch das Vorsehen eines Wasserstoff-Abzuges im Bereich des Wärme abgebenden Ende des Wärmerohrs wird der in das Wärmerohr eingedrungene und sich dort sammelnde Wasserstoff wieder aus dem Wärmerohr abgeleitet, so dass die Wärmeübertragungsleistung des Wärmerohrs erhalten bleibt. Der Wasserstoffabzug erzeugt zwischen dem Inneren und dem Äußeren der Rohrhülle einen Wasserstoffkonzentrationsgradienten bzw. Wasserstoffpartialdruckgradienten, so dass in das Innere des Wärmerohrs eingedrungener Wasserstoff in den Wasserstoff-Abzugs diffundiert und von dort abgezogen werden kann. Auch zwischen der das Wärmerohr umgebenden Atmosphäre, z. B. der Atmosphäre in einer reformierenden Wirbelschichtvergasungskammer, und dem Wasserstoff-Abzug bildet sich ein Wasserstoffkonzentrationsgradient bzw. Wasserstoffpartialdruckgradient, so dass auch Wasserstoff aus der umgebenden Atmosphäre in den Wasserstoff-Abzug eindiffundieren und von dort abgezogen wird.

Dieser Wasserstoffkonzentrationsgradient kann auf einfache Weise durch einen in und/oder auf der Rohrhülle verlaufenden Spülkanal bereitgestellt werden, in dem eine wasserstoffarme Atmosphäre herrscht. Diese wasserstoffarme Atmosphäre kann beispielsweise durch Abpumpen des einseitig geschlossenen Spülkanals mittels einer Vakuumpumpe hergestellt werden. (Anspruch 2)

Bei der vorteilhafte Ausgestaltung der Erfindung nach Anspruch 4 wird durch ein wasserstoffarmes Spülgas im Spülkanal auf einfache Weise eine wasserstoffarme Atmosphäre geschaffen.

Die vorteilhafte Ausgestaltung der Erfindung nach Anspruch 5 ergibt eine einfach Möglichkeit der Bereitstellung von Spülkanälen. Wichtig ist hierbei, dass sich die Rohrhülle und das Hüllrohr eng berühren und ausreichend Kontaktfläche zwischen den beiden Rohren besteht, um einen guten Wärmedurchgang von dem Inneren zur Umgebung des Wärmerohrs zu haben.

Dieser Wasserstoffpartialdruckgradient bzw. Wasserstoffkonzentrationsgradient kann auf einfache Weise durch die Beheizung des Wasserstoff-Abzugs sichergestellt werden. (Anspruch 10)

Wie bereits erwähnt werden die Wärmerohre gemäß der vorliegenden Erfindung bevorzugt zum Einkoppeln von Wärme in die reformierende Wirbelschicht eines Wärmerohr- oder Heatpipe-Reformers eingesetzt, insbesondere in Reformern wie sie aus der WO 00/77128 A1 bekannt sind. (Anspruch 11)

Es versteht sich von selbst, dass all diese Maßnahmen auch die Wirksamkeit von Heatpipes im drucklosen Betrieb unter wasserstoffreicher Atmosphäre verbessern. Die Erfindung ist somit nicht auf Betrieb von Heatpipes in druckaufgeladenen Einsatzumgebung beschränkt.

Die übrigen Unteransprüche beziehen sich auf weitere vorteilhafte Ausgestaltungen der Erfindung.

Weitere Einzelheiten, Merkmale und Verteile der Erfindung ergeben sich aus der nachfolgenden Beschreibung von beispielhaften Ausführungsformen der Erfindung anhand der Zeichnung.

Es zeigt
- Fig. 1: eine schematische Darstellung einer ersten Ausführungsform eines Wärmerohrs gemäß der vorliegenden Erfindung,
- Fig. 2: ein Detail der Ausführungsform nach Fig. 1,
- Fig. 3: eine Fig. 2 entsprechende Detaildarstellung einer zweiten Ausführungsform der Erfindung,
- Fig. 4: eine schematische Darstellung einer zweiten Ausführungsform der Erfindung,
- Fig. 5a und 5b: Details der zweiten Ausführungsform nach Fig. 4, und
- Fig. 6: einen Heatpipe-Refomer mit Wärmerohren gemäß der vorliegenden Erfindung.

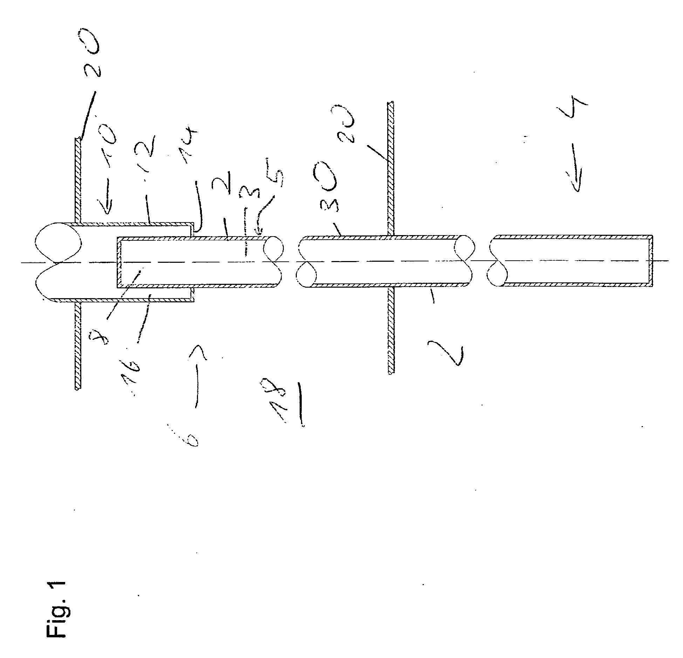

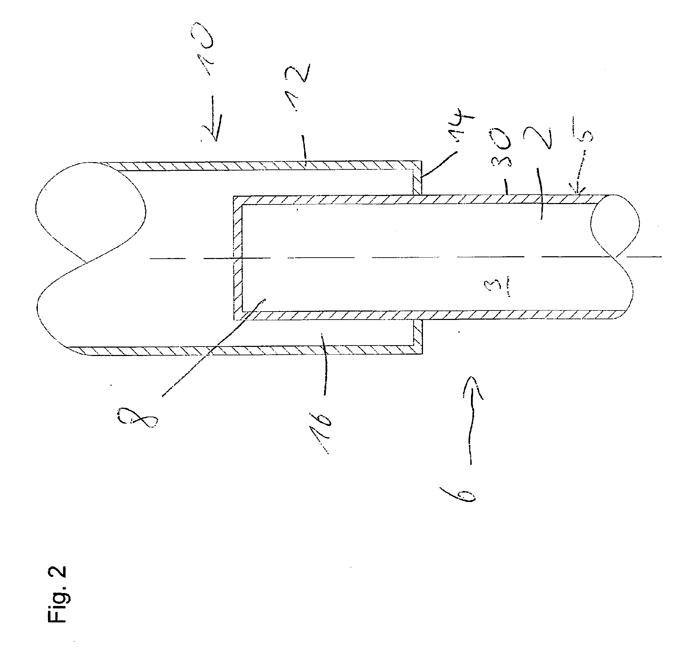

Die Figuren 1 und 2 zeigen eine erste Ausführungsform der Erfindung. Ein Wärmerohr 1 gemäß der ersten Ausführungsform der Erfindung umfasst eine Rohrhülle 2 aus Metall in deren Innerem 3 in bekannter Weise ein Wärmeträgermedium zirkuliert. Das Wärmerohr 1 umfasst ein Wärme aufnehmendes Ende 4 und ein Wärme abgebendes Ende 6. Die Außenseite 5 der Rohrhülle ist folglich als Wärmetauscherfläche ausgebildet bzw. hat die Funktion einer Wärmetauscherfläche. Ein Teil 8 des Wärme abgebenden Endes 6 wird von einem Wasserstoff-Abzug 10 mit einer Hülle 12 umschlossen. Der Wasserstoff-Abzug 10 ist ebenfalls rohrförmig und besitzt einen größeren Durchmesser als die Rohrhülle 2. Der rohrförmige Wasserstoff-Abzug 10 wird über das Wärme abgebende Ende 6 der Rohrhülle 2 geschoben und über einen Boden 14 gasdicht verschweißt. Hierdurch wird ein Ringraum 16 gebildet, der einerseits durch die Hülle 12 des Wasserstoff-Abzugs 10 und andererseits durch den Teil 8 der Rohrhülle 2 begrenzt wird. In diesen Ringraum 16 diffundiert der sich im Teil 8 des Wärmerohrs sammelnde Wasserstoff hinein und wird gesammelt oder abgesaugt. Das Wärme abgebende Ende 6 des Wärmerohrs befindet sich in wasserstoffreicher Einsatzumgebung, beispielsweise in der reformierenden Wirbelschicht 18, die in einem Druckbehälter 20 eingeschlossen ist. Hierbei durchsetzt der Wasserstoff-Abzug 10 den Druckbehälter 20, so dass der Wasserstoff an die Umgebung abgeführt werden kann.

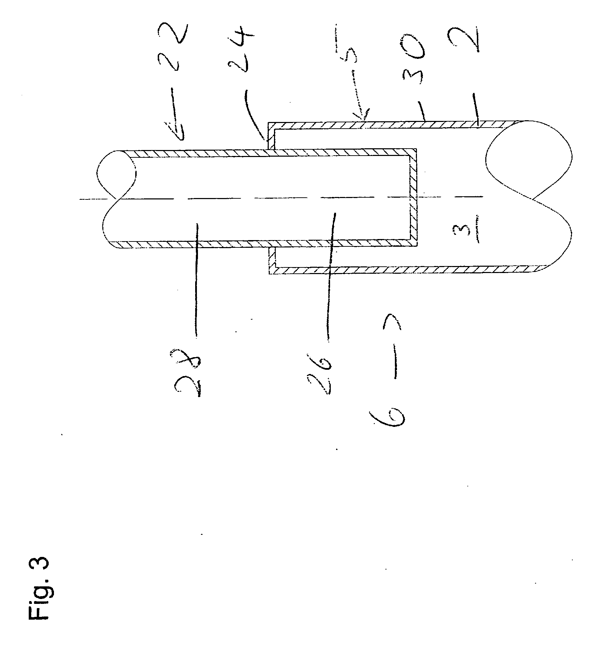

Die in Fig. 3 schematisch dargestellte zweite Ausführungsform der Erfindung unterscheidet sich von der ersten hinsichtlich der Ausgestaltung des Wasserstoff-Abzugs. Ein Wärmerohr 21 weist eine Wasserstoff-Abzug 22 auf, der ebenfalls rohrförmig ist, jedoch einen kleineren Durchmesser als die Rohrhülle 2 besitzt. Der Wasserstoff-Abzug 22 durchsetzt die Stirnseite 24 des Wärme abgebenden Endes 6 des Wärmerohrs und taucht nach Art eines Fingers in die Rohrhülle 2 ein. Damit befindet sich ein Teil 26 des Wasserstoff-Abzugs 22 im Inneren der Rohrhülle 2 und ein Teil 28 des Wasserstoff-Abzugs 22 ragt aus der Rohrhülle 2 heraus.

Bei der zweiten Ausführung nach Fig. 2 ist zu beachten, dass die Wand des Wasserstoff-Abzugs 22 zur Verbesserung des Flusses des Wärmeträgermediums mit einer Dochtstruktur versehen werden kann.

Bei beiden Ausführungsformen ist der Teil der Rohrhülle 2, der sich in der wasserstoffreichen Einsatzumgebung befindet mit einer Beschichtung 30 versehen, die eine Wasserstoffdiffusionsbarriere darstellt.

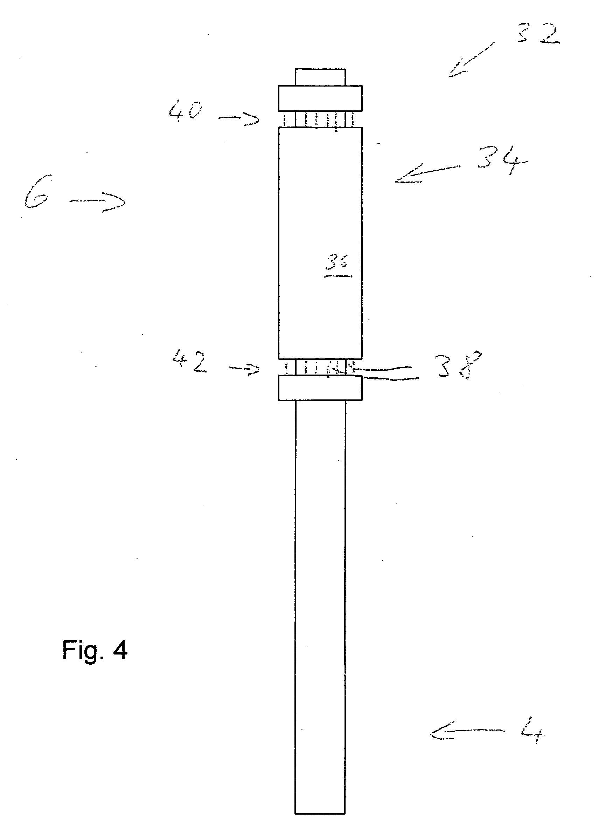

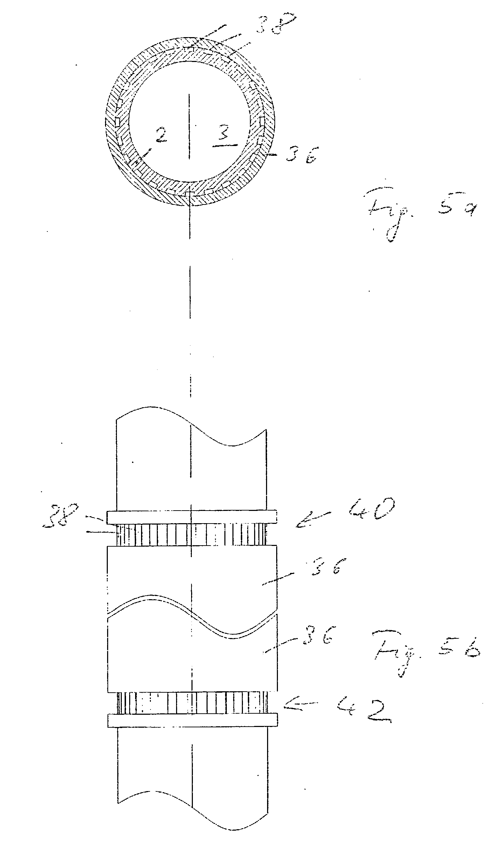

Die Fig. 4 und 5 zeigen eine dritte Ausführungsform der Erfindung. Ein Wärmerohr 32 ist mit einem Wasserstoff-Abzug 34 versehen. Der Wasserstoff-Abzug 34 erstreckt sich über den größten Teil des Wärme abgebenden Endes 6 des Wärmerohres 32. Der Wasserstoff-Abzug 34 umfasst ein Hüllrohr 36 dessen Innendurchmesser in etwa gleich dem Außendurchmesser der Rohrhülle 2 ist. Das Hüllrohr 36 wird über das Wärme abgebende Ende 6 des Wärmerohrs 32 geschoben und auf die Rohrhülle 2 aufgeschrumpft. Zwischen dem Hüllrohr 36 und der Außenseite 5 der Rohrhülle 2 erstrecken sich über die Länge des Hüllrohres 36 Spülkanäle 38. Wie aus Fig. 5 zu ersehen ist, sind die Spülkanäle 38 durch in die Außenseite 5 der Rohrhülle 2 eingebrachte Vertiefungen oder Nuten gebildet, die von dem Hüllrohr 36 nach außen hin abgedeckt werden. An einem Ende des Hüllrohres 36 ist ein Spülgaseinlass 40 und an dem anderen Ende des Hüllrohres 36 ist ein Spülgasauslass 42 vorgesehen in die die Spülkanäle 38 münden. Die Spülkanäle 38 erstrecken sich parallel zur Längsachse des Wärmerohrs 32 äquidistant über den Umfang der Rohrhülle 2 verteilt, wie dies aus Figuren 5a und 5b zu ersehen ist. Die Erfindung ist jedoch nicht auf diese Anordnung der Spülkanäle beschränkt; es ist auch jede andere Form der geometrischen Anordnung der Spülkanäle denkbar.

Bei Einsatz des Wärmerohres 32 in wasserstoffreicher Atmosphäre werden die Spülkanäle 36 kontinuierlich oder zumindest in bestimmten Zeitabständen von einem wasserstoffarmen Spülgas durchströmt. Damit ergibt sich zwischen dem Inneren 3 des Wärmerohres 32 und den Spülkanälen 38 ein Wasserstoffkonzentrationsgradient, der dazu führt, dass in das Innere 5 des Wärmerohres 32 eingedrungener Wasserstoff durch die Außenhülle 2 hindurch in die Spülkanäle diffundiert und mit dem Spülgas aus dem Bereich des Wärme abgebenden Endes 6 des Wärmerohres 32 entfernt wird.

Die vorstehend beschriebenen Wasserstoff-Abzüge 10, 22 und 34 können auch miteinander kombiniert werden, in dem z. B. der Wasserstoff-Abzug 34 zusätzlich beheizt wird.

Die Wärmerohre gemäß der vorliegenden Erfindung eignen sich besonders für den Einsatz in einem Heatpipe-Reformer wie er aus der WO 00/77128 A1 bekannt ist. Insofern wird auf die dortige Beschreibung vollinhaltlich Bezug genommen.

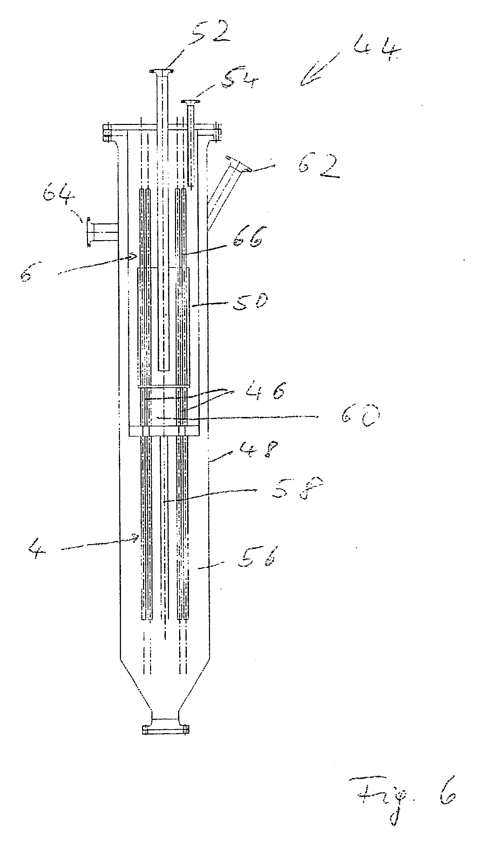

In Fig. 6 ist ein solcher Heatpipe-Reformer 44 gezeigt, in den eine Mehrzahl von Wärmerohren 46 eingebaut sind. Bei den Wärmerohren 46 kann es sich um Wärmerohre gemäß den vorstehend beschriebenen Ausführungsformen handeln. Der Heatpipe-Reformer 44 umfasst den Druckbehälter 48, der rohrförmig ausgebildet ist. Im oberen Bereich des Heatpipe-Reformers 44 bzw. des Druckbehälters 48 ist eine reformierende Wirbelschichtvergasungskammer 50 angeordnet in der durch allotherme Wasserdampfvergasung wasserstoffhaltiges Brenngas aus kohlenstoffhaltigen Einsatzstoffen erzeugt wird. Die kohlenstoffhaltigen Einsatzstoffe werden über eine Zuführeinrichtung 52 in die Wirbelschichtvergasungskammer 50 eingebracht. Über einen Produktgasaustritt 54 wird das in der reformierenden Wirbelschichtvergasungskammer 50 erzeugte Produktgas abgezogen. Im unteren Bereich des Heatpipe-Reformers 44 bzw. des Druckbehälters 48 ist eine Wirbelschichtfeuerung 56 als externe Wärmequelle angeordnet. Die Wirbelschichtfeuerung 56 wird mit Koks befeuert, der aus dem Wirbelschichtvergaser 50 über einen Koksabzug 58 und eine Druckschleuse 60 abgezogen wird. Alternativ kann die Wirbelschichtfeuerung 56 auch mit dem Einsatzstoff in den Wirbelschichtvergaser 50 oder beliebigen anderen Einsatzstoffen beheizt wird. Diese Brennstoffe können der Wirbelschichtfeuerung 56 über einen Brennstoffeinlass 62 zugeführt werden. Das in der Wirbelschichtfeuerung 56 entstehende Rauchgas wird über einen Rauchgasabzug 64 abgezogen. Die Wärmerohre 46 sind im Bereich des Wärme abgebenden Endes 6 mit einem Wasserstoff-Abzug 66 versehen, bei dem es sich um einen Wasserstoff-Abzug gemäß den vorstehend beschriebenen Ausführungsformen der Wärmerohre 1, 21, 32 oder um Mischformen daraus handelt.

Die lang gestreckten rohrförmigen Wärmerohre 46 tauchen mit dem Wärme aufnehmenden Ende 4 in die Wirbelschichtfeuerung 56 und mit dem Wärme abgebenden Ende 6 in die Wirbelschichtvergasungskammer 50 ein. Damit übertragen die Wärmerohre 46 die in der Wirbelschichtfeuerung 56 erzeugte Wärme in die Wärme verbrauchende Wirbelschichtvergasungskammer 50. Bei den in der Wirbelschichtvergasungskammer 50 herrschenden Betriebstemperaturen im Bereich von 800 - 900 °C wird die metallene Rohrhülle 2 und auch das Hüllrohr 36 - beide Rohre bestehen vorzugsweise aus hochwarmfesten Edelstahl - für molekularen Wasserstoff durchlässig, so dass Wasserstoff aus dem Brenngas in das Innere 3 der Wärmerohre 46 gelangen kann. Über den Wasserstoff-Abzug 10, 22, 34 kann dieser wieder aus dem Inneren 3 der Wärmerohre 46 abgezogen werden.

Für den Fall, dass als Wärmerohre 46 die Wärmerohre 32 eingesetzt werden, kann das Spülgas zur Wasserstoffausspülung gleichzeitig zur Fluidisierung der Wirbelschicht in der Wirbelschichtvergasungskammer 50 eingesetzt werden.

### Bezugszeichenliste:

- 1: Wärmerohr
- 2: Rohrhülle
- 3: Inneres von 2
- 4: Wärme aufnehmendes Ende
- 5: Außenseite von 2
- 6: Wärme abgebendes Ende
- 8: Teil von 6
- 10: Wasserstoff-Abzug
- 12: Hülle von 10
- 14: Boden von 10
- 16: Ringraum
- 18: reformierende Wirbelschicht
- 20: Druckbehälter

- 21: Wärmerohr
- 22: Wasserstoff-Abzug
- 24: Stirnseite von 2
- 26: Teil von 22 im Inneren von 2
- 28: Teil von 22 außerhalb von 2
- 30: Beschichtung

- 32: Wärmerohr
- 34: Wasserstoff-Abzug
- 36: Hüllrohr
- 38: Spülkanäle
- 40: Spülgaseinlass
- 42: Spülgasauslass
- 44: Heatpipe-Reformer
- 46: Wärmerohre
- 48: Druckbehälter
- 50: reformierende Wirbelschichtvergasungskammer
- 52: Zuführeinrichtung zur Einbringung der zu vergasenden kohlenstoffhaltigen Einsatzstoffe
- 54: Produktgasabzug
- 56: Wirbelschichtfeuerung
- 58: Koksabzug
- 60: Druckschleuse
- 62: Brennstoffeinlass
- 64: Rauchgasabzug
- 66: Wasserstoff-Abzug

## Patentansprüche

1. Wärmerohr mit
einer Rohrhülle (2) aus Metall in dessen Innerem (3) ein Wärmeträgermedium zirkuliert, wobei die Rohrhülle (2) eine Außenseite (5) aufweist, die wenigstens teilweise als Wärmetauscherfläche ausgebildet ist,
einem Wärme aufnehmenden Ende (4) und
einem Wärme abgebenden Ende (6),
wobei zumindest in einem Teilbereich des Wärmerohrs ein Wasserstoff-Abzug (10, 22, 34) vorgesehen ist, der zwischen dem Inneren (3) der Rohrhülle (2) und der Außenseite (5) der Rohrhülle (2) einen Wasserstoffkonzentrationsgradienten/Wasserstoffpartialdruckgradienten bereitstellt,
**dadurch gekennzeichnet, dass**
der Wasserstoff-Abzug (10, 22, 34) in einem Teilbereich des Wärme abgebenden Endes des Wärmerohrs vorgesehen ist.

2. Wärmerohr nach Anspruch 1, **dadurch gekennzeichnet, dass** der Wasserstoff-Abzug (32) wenigstens einen in und/oder auf der Rohrhülle (2) verlaufenden Spülkanal (38) umfasst, in dem eine wasserstoffarme Atmosphäre herrscht.

3. Wärmerohr nach Anspruch 2, **dadurch gekennzeichnet, dass** der wenigstens eine Spülkanal durch eine in die Rohrhülle (2) des Wärmerohrs eingebrachte Bohrung gebildet ist.

4. Wärmerohr nach Anspruch 2 oder 3, **dadurch gekennzeichnet, dass** in dem wenigstens einen Spülkanal (38) ein wasserstoffarmes Spülgas strömt.

5. Wärmerohr nach einem der vorhergehenden Ansprüche 2 bis 4, **dadurch gekennzeichnet, dass** der Wasserstoff-Abzug (32) ein die Rohrhülle (2) des Wärmerohrs umschließendes Hüllrohr (36) umfasst, und dass der wenigstens eine Spülkanal (38) zwischen dem Hüllrohr (36) und der Rohrhülle (2) angeordnet ist.

6. Wärmerohr nach Anspruch 5, **dadurch gekennzeichnet, dass** der wenigstens eine Spülkanal (38) durch eine in die Rohrhülle (2) des Wärmerohrs und/oder in das Hüllrohr (36) eingebrachte Nut gebildet ist.

7. Wärmerohr nach einem der vorhergehenden Ansprüche 2 bis 6, **dadurch gekennzeichnet, dass** der wenigstens eine Spülkanal (38) mit einem Spülgaseinlass (40) und mit einem Spülgasauslass (42) versehen ist.

8. Wärmerohr nach einem der vorhergehenden Ansprüche 2 bis 7, **dadurch gekennzeichnet, dass** eine Mehrzahl von Spülkanälen (38) in Längsrichtung des Wärmerohrs verlaufen.

9. Wärmerohr nach einem der vorhergehenden Ansprüche 2 bis 6, **dadurch gekennzeichnet, dass** der wenigstens eine Spülkanal spiralförmig entlang des Wärmerohrs verläuft.

10. Wärmerohr nach einem der vorhergehenden Ansprüche, **dadurch gekennzeichnet, dass** der Wasserstoff-Abzug (10; 22) beheizt ist

11. Heatpipe-Reformer zur Erzeugung von Brenngas aus kohlenstoffhaltigen Einsatzstoffen durch allotherme Wasserdampfvergasung, mit
- einer reformierenden Wirbelschichtvergasungskammer (50) mit einer Wirbelschicht,
- einer Zuführeinrichtung (52) zur Aufgabe der zu vergasenden Einsatzstoffe in die Wirbelschichtvergasungskammer (50),
- einer Zuleitung (54) in die Wirbelschichtvergasungskammer (50) für Wasser und/oder Wasserdampf,
- einer externen Wärmequelle (56), und
- einer Wärmeleitrohranordnung mit wenigstens einem Wärmeleitrohr (46) zur Übertragung von Wärme aus der externen Wärmequelle (56) in die reformierende Wirbelschichtvergasungskammer (50),
**dadurch gekennzeichnet,**
**dass** das wenigstens eine Wärmerohr (46) eine Wärmerohr (1; 21; 32) nach einem der vorhergehenden Ansprüche 1 bis 10 ist.

12. Verfahren zum Betreiben eines Heatpipe-Reformers nach Anspruch 11, dg, dass das Spülgas zur Entfernung des Wasserstoffes aus dem wenigstens einen Spülkanal (38) zur Fluidisierung der Wirbelschicht verwendet wird.

## Claims

1. A heat pipe, comprising:
a pipe sleeve (2) made from metal with a heat transfer medium circulating in an interior (3) of the pipe sleeve, wherein the pipe sleeve (2) includes an outside (5) which is at least partially configured as a heat exchanger surface;
a heat absorbing end (4); and
a heat dissipating end (6),
wherein a hydrogen outlet (10, 22, 34) is provided at least in a portion of the heat pipe, which hydrogen outlet provides a hydrogen concentration gradient / hydrogen partial pressure gradient between the interior (3) of the pipe sleeve (2) and the exterior (5) of the pipe sleeve (2),
wherein the hydrogen outlet (10, 22, 34) is provided in a portion of the heat dissipating end of the heat pipe.

2. The heat pipe according to claim 1, wherein the hydrogen outlet (32) includes at least one flushing channel (38) extending in and/or on the pipe sleeve (2), wherein a low hydrogen atmosphere is provided in the flushing channel.

3. The heat pipe according to claim 2, wherein the at least one flushing channel is formed by a borehole that is introduced into the pipe sleeve (2) of the heat pipe.

4. The heat pipe according to claim 2 or 3, wherein a low hydrogen flushing gas flows in the at least one flushing channel (38).

5. The heat pipe according to one of the preceding claims 2 through 4, wherein the hydrogen outlet (32) includes a jacket tube (36) enveloping the pipe sleeve (2) of the heat pipe and wherein the at least one flushing channel (38) is arranged between the jacket tube (36) and the pipe sleeve (2).

6. The heat pipe according to claim 5, wherein the at least one flushing channel (38) is formed by a groove introduced into the pipe sleeve (2) of the heat pipe and/or introduced into the jacket tube (36).

7. The heat pipe according to one of the preceding claims 2 through 6, wherein the at least one flushing channel (38) is provided with a flushing gas inlet (40) and with a flushing gas outlet (42).

8. The heat pipe according to one of the preceding claims 2 through 7, wherein a plurality of flushing channels (38) extends in longitudinal direction of the heat pipe.

9. The heat pipe according to one of the preceding claims 2 through 6, wherein the at least one flushing channel extends in a spiral along the heat pipe.

10. The heat pipe according to one of the preceding claims, wherein the hydrogen outlet (10; 22) is heated.

11. A heat pipe reformer for generating combustion gas from insert materials that include carbon through allothermal water vapor gasification, comprising:
- a reforming vortex layer gasification chamber with a vortex layer,
- a supply device (52) for placing the insert materials to be gasified into the vortex layer gasification chamber (50),
- a feed line (54) into the vortex layer gasification chamber (50) for water and/or water vapor,
- an external heat source (56), and
- a heat conducting tube assembly with at least one heat conducting pipe (46) for transferring heat from the external heat source (56) into the reforming vortex layer gasification chamber (50),
wherein the at least one heat conducting pipe (46) is a heat pipe (1; 21; 32) according to one of the preceding claims 1 through 10.

12. A method for operating a heat pipe reformer according to claim 11, wherein the flushing gas is used for removing the hydrogen from the at least one flushing channel (38) for rendering the vortex layer fluidic.

## Revendications

1. Caloduc
comprenant une enveloppe de tube (2) en métal à l'intérieur (3) duquel circule un agent caloporteur, la gaine tubulaire (2) présentant une face externe (5) qui est réalisée au moins partiellement comme surface d'échange thermique,
une extrémité (4) absorbant la chaleur et
une extrémité (6) délivrant la chaleur,
au moins dans une zone partielle du caloduc, il est prévu une extraction d'hydrogène (10, 22, 34) qui met à disposition entre l'intérieur (3) de la gaine tubulaire (2) et la face extérieure (5) de la gaine tubulaire (2) un gradient de concentration d'hydrogène/gradient de pression partiel d'hydrogène,
**caractérisé en ce que**
l'extraction d'hydrogène (10, 22, 34) est prévu dans une zone partielle de l'extrémité délivrant la chaleur, du caloduc.

2. Caloduc selon la revendication 1, **caractérisé en ce que** l'extraction d'hydrogène (32) comprend au moins un canal de balayage (38) s'étendant dans et/ou sur la gaine tubulaire (2) dans lequel règne une atmosphère pauvre en hydrogène.

3. Caloduc selon la revendication 2, **caractérisé en ce qu'**au moins un canal de balayage est formé par un perçage agencé dans la gaine tubulaire (2) du caloduc.

4. Caloduc selon l'une des revendications 2 ou 3, **caractérisé en ce qu'**un gaz de balayage pauvre en hydrogène s'écoule dans au moins un canal de balayage (38).

5. Caloduc selon l'une des revendications précédentes 2 à 4, **caractérisé en ce que** l'extraction d'hydrogène (32) comprend un tube gainant (36) entourant la gaine tubulaire (2) du caloduc, et **en ce que** au moins un canal de balayage (38) est disposé entre le tube gainant (36) et la gaine tubulaire (2).

6. Caloduc selon la revendication 5, **caractérisé en ce qu'**au moins un canal de balayage (38) est formé par une rainure ménagée dans la gaine tubulaire (2) du caloduc et/ou dans le tube gainant (36).

7. Caloduc selon l'une des revendications précédentes 2 à 6, **caractérisé en ce qu'**au moins un canal de balayage (38) est muni d'une entrée de gaz de balayage (40) et d'une sortie de gaz de balayage (42).

8. Caloduc selon l'une des revendications précédentes 2 à 7, **caractérisé en ce qu'**une pluralité de canaux de balayage (38) s'étend dans la direction longitudinale du caloduc.

9. Caloduc selon l'une des revendications précédentes 2 à 6, **caractérisé en ce qu'**au moins un canal de balayage s'étant en forme de spirale le long du caloduc.

10. Caloduc selon l'une des revendications précédentes, **caractérisé en ce que** l'extraction d'hydrogène (10 ; 22) est chauffée.

11. Reformeur à caloduc pour la génération de gaz combustible à base de substances carburée par dégazage de vapeur d'eau par procédé allothermique comprenant
- une chambre de dégazage à lit fluidisé de reformation (50)
- un dispositif d'alimentation (52) pour l'amenée des substances actives à gazéifier dans la chambre à lit fluidisé (50),
- une conduite d'amenée (54) dans la chambre de dégazage à lit fluidisé (50) pour l'eau et/ou la vapeur d'eau,
- une source externe thermique (56), et
- un dispositif de tube de conduction thermique avec au moins un tube collecteur de conduction thermique (46) pour la transmission de chaleur provenant de la source thermique externe (56) dans la chambre de dégazage à lit fluidisé de reformation (50), **caractérisé en ce que** au moins le caloduc (46) est un caloduc (1; 21; 32) selon l'une des revendications précédentes 1 à 10.

12. Procédé pour la mise en service d'un reformeur de caloduc selon la revendication 11, **caractérisé en ce que** le gaz de balayage set utilisé pour l'élimination de l'hydrogène d'au moins un canal de balayage (38) pour la fluidisation du lit fluidisé.
